# EUROPÄISCHE PATENTSCHRIFT

(11) **EP 1 797 801 B1**
(45) Veröffentlichungstag und Bekanntmachung des Hinweises auf die Patenterteilung: **08.01.2014**
(21) Anmeldenummer: 06014893.9
(22) Anmeldetag: 14.07.2006
(51) Int. Cl.: A47J 31/60, A47J 31/44, B67D 1/07

(54) **Kaffeemaschine mit einer Reinigungsvorrichtung für die Milchzufuhrleitung**
A coffee machine with a milk conduct cleaning device
Une machine à café avec un dispositif de nettoyage de l'amenée de lait

(30) Priorität: 13.12.2005 EP 05027220
(43) Veröffentlichungstag der Anmeldung: 20.06.2007
(73) Patentinhaber: WMF WÜRTTEMBERGISCHE METALLWARENFABRIK AG, 73309 Geislingen/Steige (DE)
(72) Erfinder: Bockwoldt, Peter, 73095 Albershausen (DE); Startz, Armin, 89197 Weidenstetten (DE)
(74) Vertreter: Grünecker, Kinkeldey, Stockmair & Schwanhäusser

(56) Entgegenhaltungen:
- EP-A- 1 386 880
- US-A- 2 961 853
- US-A- 3 132 656

## Beschreibung

Die Erfindung bezieht sich auf eine Vorrichtung zum Zuführen von Milch der im Oberbegriff von Anspruch 1 erläuterten Art.

Eine derartige Vorrichtung ist aus dem EP 344 859 bekannt. Die bekannte Vorrichtung dient zum Ausgeben erwärmter Milch und enthält weiterhin eine Aufschäumvorrichtung, mit der die Milch zusätzlich aufgeschäumt werden kann. Aufschäumvorrichtungen für Milch sind in den unterschiedlichsten Wirkprinzipien bekannt; bei der beschriebenen Vorrichtung wird Milch, beispielsweise unter Ausnutzung des Venturi-Prinzips, aus einem Vorratsbehälter angesaugt. Dies geschieht über eine Zufuhrleitung in Form eines Schlauchs, dessen Auslassende mit der Aufschäumeinrichtung verbunden wird und dessen Einlassende einfach in einen Vorratsbehälter für Milch eingesteckt wird. Ein Problem bei allen Vorrichtungen, die Milch handhaben, ist die Reinigung. Milch verdirbt schnell und demzufolge sollten die mit Milch in Berührung kommenden Teile möglichst oft und möglichst gründlich gereinigt werden. Dies ist innerhalb der Erhitzungs- und Aufschäumeinrichtung weniger ein Problem, da dort mit Dampf gearbeitet wird, so dass die Aufschäumeinrichtung durch einen reinen Dampfstoß, ohne Milcheinleitung, relativ problemlos gereinigt werden kann, wobei zumindest bis zur nächsten gründlichen Reinigung unter Demontage der Teile und/oder Einsatz von Reinigungsmitteln ein Bakterienwachstum sicher verhindert wird. Da es jedoch keinen natürlichen Weg für den Dampf in die Zufuhrleitung gibt, kann die Zufuhrleitung auf diese Weise nicht oder zumindest nicht ausreichend gereinigt werden. Bei der bekannten Vorrichtung wird deshalb vorgeschlagen, den Zufuhrschlauch zwischenzeitlich mit seinem Einlassende in eine Reinigungsflüssigkeit zu bringen und durch eine Betätigung der Vorrichtung statt Milch nunmehr die Reinigungsflüssigkeit durch die Zufuhrleitung anzusaugen. Dies ist jedoch umständlich und führt unter Umständen nicht zum gewünschten Ergebnis. Für eine gründliche Reinigung der Zufuhrleitung könnte auch heißes Wasser kurz vor dem Kochen verwendet werden, was jedoch problematisch zu handhaben ist und auch nicht immer zur Verfügung steht. Kaltes oder lediglich warmes Wasser führt nicht zum gewünschten Reinigungsergebnis. Werden chemische Reinigungsmittel verwendet, so muss anschließend aufwendig gespült werden, um sicherzustellen, dass alle Rückstände aus der Vorrichtung entfernt werden.

Aus der US-A-2,961 ,853 ist eine Kühleinrichtung zum Zubereiten und Ausgeben von halbfest gefrorenen Erfrischungen, wie beispielsweise Eiscreme, Eismilch, gefrorene Desserts oder dergleichen bekannt. Diese Einrichtung enthält Mittel zum periodischen Waschen der produktführenden Teile. Die Wascheinrichtung umfasst einen Heißwasserbereiter, der nur zum Zwecke der Reinigung vorgesehen ist. Der Heißwasserbereiter weist ein Ausgangsventil auf, an das ein Zufuhrschlauch aus einem Vorratsbehälter angesteckt wird, wenn die Reinigung durchgeführt werden soll.

Ein Beispiel einer Kaffeemaschine gemäß dem Stand der Technik is in EP 0791321 A1 zu finden.

Der Erfindung liegt somit die Aufgabe zugrunde, eine Vorrichtung der genannten Art so weiterzubilden, dass die Reinigung erleichtert wird.

Die Aufgabe wird bei einer Vorrichtung durch die Merkmale des Anspruchs 1, bei einem Verfahren durch die Merkmale des Anspruchs 7 gelöst.

Durch die erfindungsgemäße Ausgestaltung wird ein sehr effektives Reinigungssystem für die milchführende Zufuhrleitung geschaffen. Durch die Anwendung von Heißwasser und/oder Dampf, die zum Fördern oder Erhitzen der Milch sowieso vorhanden sind, kann ein effektives Reinigen der Zufuhrleitung möglichgemacht werden. Zu diesem Zweck muss lediglich ein Heißwasser- und/oder Dampfauslass vorgesehen sein, falls dieser nicht sowieso vorhanden ist (was bei den meisten Kaffeemaschinen der Fall ist), und der Benutzer muss das Einlassende der Zufuhrleitung lediglich aus bzw. von dem Milchvorratsbehälter entfemen und an den Auslass anstecken, um einen Reinigungsvorgang durchführen zu können.

Vorteilhafte Weiterbildungen sind den Unteransprüchen zu entnehmen.

Um das Umstecken des Einlassendes der Zufuhrleitung zu erleichtern, ist der Auslass bevorzugt im Bereich des Vorratsbehälters angeordnet.

Wird mit Heißwasser gereinigt, so sollte, um Gefährdungen des Benutzers zu vermeiden, in der Zufuhrleitung verbleibendes Restheißwasser entfernt werden. Dies kann durch die unterschiedlichsten Maßnahmen geschehen.

Um das Umstecken der Zufuhrleitung zu vereinfachen, kann die Anschlusseinrichtung ein speziell angepasstes Kupplungsstück enthalten. Es ist jedoch auch möglich, die Abmessungen des Auslasses an die Abmessungen der Zufuhrleitung so anzupassen, dass beide ineinandersteckbar sind.

Die Zufuhrleitung kann entweder in oder am Vorratsbehälter befestigt sein. Eine besonders bevorzugte und leicht zu reinigende Ausgestaltung besteht darin, dass die Zufuhrleitung am Vorratsbehälter, und zwar an einem fest in den Vorratsbehälter integrierten Ansaugstutzen befestigt ist. Auf diese Weise kann der Ansaugstutzen zusammen mit dem Vorratsbehälter auf einfache Weise, beispielsweise in einer Geschirrspülmaschine, gereinigt werden, während eine Innenreinigung des Zufuhrschlauches in der erfindungsgemä-ßen Weise erfolgt.

Insbesondere kann der bei Kaffeemaschinen sowieso vorhandene Heißwasserauslass bzw. Dampfauslass erfindungsgemäß so mit der Anschlusseinrichtung versehen sein, dass die Zufuhrleitung dort anbringbar ist.

Ausführungsbeispiele der Erfindung werden nachfolgend anhand der Zeichnungen näher erläutert. Es zeigen:
- Fig. 1: ein erstes Prinzip der Erfindung in schematischer Darstellung,
- Fig. 2: ein zweites Prinzip der Erfindung in schematischer Darstellung,
- Fig. 3: ein drittes Prinzip der Erfindung in schematischer Darstellung, und
- Fig. 4: eine erfindungsgemäße Kaffeemaschine in schematischer Darstellung.

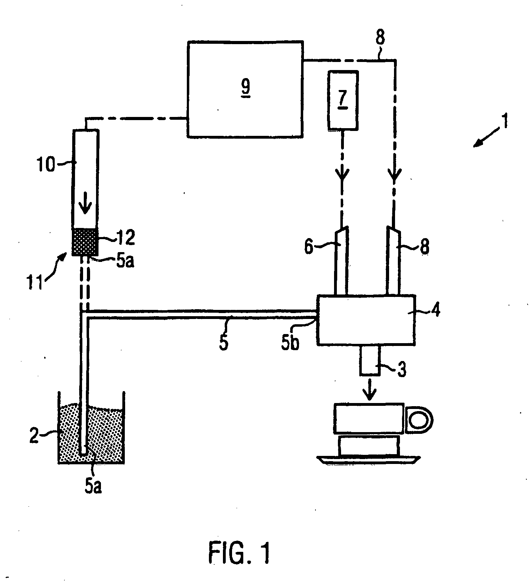

Fig. 1 zeigt ein erstes Ausführungsbeispiel einer erfindungsgemäßen Vorrichtung 1 zum Zuführen von Milch aus einem Vorratsbehälter 2 zu einer Ausgabeeinrichtung 3. Die nur als Prinzipskizze dargestellte Vorrichtung 1 kann Teil jeder Vorrichtung sein, die Milch auf die beschriebene Art und Weise handhabt. Im dargestellten Ausführungsbeispiel ist die Vorrichtung 1 als Vorrichtung zum Zubereiten und Ausgeben von erhitztem Milchschaum ausgebildet und enthält zu diesem Zweck eine Aufschäumeinrichtung 4, die in bekannter Weise ausgebildet sein kann, beispielsweise die Aufschäumvorrichtung nach der DE 44 45 436 enthalten kann. Die Wirkungsweise und der konstruktive Aufbau von Aufschäumvorrichtungen sind bekannt und müssen nicht nochmals erläutert werden.

Die Aufschäumeinrichtung 4 steht über eine Zufuhrleitung 5 mit dem Vorratsbehälter 2 für die Milch in Verbindung. Die Zufuhrleitung 5 ist mit ihrem Einlassende 5a lösbar in oder am Vorratsbehälter 2 befestigt, im dargestellten Ausführungsbeispiel einfach in den Vorratsbehälter 2 eingelegt. Das Auslassende 5b der Zufuhrleitung 5 ist an der Aufschäumeinrichtung 4 befestigt, kann dort jedoch ebenfalls lösbar angeordnet sein, um eine Demontage für eine grundlegende Reinigung zu ermöglichen. Die Zufuhrleitung 5 ist bevorzugt flexibel, und insbesondere ein flexibler Schlauch aus Kunststoff oder Gummi.

Der Aufschäumeinrichtung 4 wird im dargestellten Ausführungsbeispiel über eine Leitung 6 Luft zugeführt, die entweder nach dem Venturi-Prinzip angesaugt oder als Druckluft bereitgestellt wird, beispielsweise über eine Druckluftquelle 7, wie beispielsweise eine Druckluftpatrone oder eine Pumpe oder dgl..

Der Aufschäumeinrichtung 4 wird zum Erhitzen der Milch Wasserdampf über eine weitere Leitung 8 zugeführt. Die Leitung 8 ist mit einem geeigneten Dampferzeuger 9 verbunden. Der Dampferzeuger 9 ist von herkömmlicher Bauart und kann beispielsweise als Durchlauferhitzer ausgebildet sein. Bevorzugt wird jedoch ein kombinierter Heißwasser- und Dampferzeuger verwendet, der neben dem Dampf für die Aufschäumeinrichtung 4 Heißwasser für einen Heißwasserauslass 10 liefert. Der Heißwasserauslass 10, durch den auch Dampfanteile ausgegeben werden können, ist für den Benutzer zugänglich und so angeordnet, dass er im Bereich des Einlassendes 5a der Zufuhrleitung 5 liegt, wenn die Zufuhrleitung 5 mit der Aufschäumeinrichtung 4 verbunden ist. Der Heißwasserauslass 10 sollte in einem Abstand vom Auslassende 5b der Zufuhrleitung 5 angeordnet sein, der gleich oder kleiner als die Gesamtlänge der Zufuhrleitung 5 zwischen Einlass- und Auslassende 5a, 5b ist. Bevorzugt ist der Heißwasserauslass 10 im Bereich des Vorratsbehälters 2 für die Milch angeordnet.

Der Heißwasserauslass 10 und/oder das Einlassende 5a der Zufuhrleitung 5 sind mit einer Anschlusseinrichtung 11 versehen. Im dargestellten Ausführungsbeispiel enthält die Anschlusseinrichtung 11 ein Kupplungsstück 12, das am Heißwasserauslass 10 befestigt ist. Die Anschlusseinrichtung 11 kann jedoch auch durch korrespondierende Anschlussstücke am Auslass 10 und am Einlassende 5a bzw. durch ein Kupplungsstück allein am Einlassende 5a gebildet werden. Die Anschlusseinrichtung kann jede geeignete Konstruktion aufweisen, beispielsweise als Rastverbindung, Steckverbindung oder Bajonettverbindung ausgebildet sein, die geeignet ist, eine leicht lösbare Verbindung zwischen der Zufuhrleitung 5 und dem Auslass 10 zu bewirken, die jedoch trotzdem den mechanischen Belastungen durch das ausströmende oder unter Druck ausgedrückte Heißwasser standhält. Es ist weiterhin möglich, die Anschlusseinrichtung 11 lediglich durch eine dimensionsmäßige Anpassung zwischen den Außen- bzw. Innenabmessungen des Auslasses 10 und des Einlassendes 5a auszubilden, so dass das Einlassende 5a und der Auslass 10 einfach zusammengesteckt werden können. Dies ist besonders dann zweckmäßig, wenn das Einlassende 5a eine gewisse Materialelastizität aufweist, wie dies beispielsweise bei einem Schlauch aus Gummi oder Kunststoff der Fall ist.

Der Auslass 10 mit der Anschlusseinrichtung 11 für das Einlassende 5a der Zufuhrleitung 5 bilden eine Reinigungseinrichtung für die Zufuhrleitung 5.

Die erfindungsgemäße Vorrichtung 1 wird wie üblich zum Zubereiten und Ausgeben von Milchschaum, zum Erhitzen und Ausgeben von erwärmter Milch oder zum Ausgeben von kalter Milch betrieben, wobei zum Aufschäumen von Milch Luft und Dampf in die Aufschäumeinrichtung 4 eingegeben werden, dort Milch aus dem Vorratsbehälter 2 über die Zufuhrleitung 5 ansaugen und fertigen Milchschaum aus der Ausgabeeinrichtung 3 ausgeben. Soll die Milch lediglich erhitzt werden, so gelangt nur Dampf in die Aufschäumeinrichtung 4, saugt Milch aus dem Vorratsbehälter 2 an und gibt erhitzte Milch aus Ausgabeeinrichtung 3 aus. Soll Milch lediglich ausgegeben werden, so gelangt nur Luft in die Aufschäumeinrichtung 4 und saugt Milch aus dem Vorratsbehälter 2 an und gibt die kalte Milch aus der Ausgabeeinrichtung 3 aus.

Das Reinigen der Aufschäumeinrichtung 4 kann auf übliche Weise durch einen Dampfstoß erfolgen. Um jedoch auch die Zufuhrleitung 5 reinigen zu können, wird das Einlassende 5a der Zufuhrleitung 5 aus seiner Verbindung zum Vorratsbehälter 2 gelöst, d.h. im dargestellten Ausführungsbeispiel aus dem Vorratsbehälter 2 herausgezogen, und mit dem Heißwasserauslass 10 verbunden, während das Auslassende 5b der Zufuhrleitung 5 mit der Ausgabeeinrichtung 3 und der Aufschäumeinrichtung 4 verbunden bleibt. Dann wird, bevorzugt vom Benutzer, über ein Bedienelement angefordert, für einige Zeit, z.B. einige Sekunden, ein Heißwasserschwall aus dem Auslass 10 in die Zufuhrleitung 5 geleitet. Dieser Heißwasserschwall spült die Zufuhrleitung 5 durch und reinigt gleichzeitig auch die durch die Milch kontaminierten Teile der Aufschäumeinrichtung 4 und der Auslasseinrichtung 3, und tritt anschließend aus der Auslasseinrichtung 3 aus.

Wegen der hohen Temperatur des Heißwassers, insbesondere wenn dieses durch einen kombinierten Heißwasser-Dampf-Bereiter 9 bereitgestellt wird, sollte sichergestellt werden, dass sich kein Restheißwasser in der Zufuhrleitung 5 befindet, wenn das Einlassende 5a der Zufuhrleitung 5 wieder vom Auslass 10 getrennt wird. Dies kann durch die unterschiedlichsten Maßnahmen geschehen; z.B. kann die Anordnung und konstruktive Ausgestaltung der Teile so gewählt werden, dass sich das Auslassende 5b der Zufuhrleitung 5 an der tiefsten Stelle der Zufuhrleitung 5 befindet, so dass das Restheißwasser durch Schwerkrafteinwirkung ausfließt. Wird zum Bereiten von Heißwasser ein Durchlauferhitzer verwendet, so kann durch eine geeignete Steuerung sichergestellt werden, dass die Heizung vor dem Ende des Reinigungsvorgangs abgeschaltet wird, so dass nach dem Ende des Reinigungsvorgangs nur Kaltwasser in der Zufuhrleitung 5 steht. Ist am Heißwasserauslass 10 auch Dampf verfügbar, so kann über den Auslass 10 am Schluss des Reinigungsvorgangs ein Dampfstoß ausgegeben werden, der Restheißwasser aus der Zufuhrleitung drückt. Erfolgt das Aufschäumen in der Aufschäumvorrichtung 4 mit Hilfe von Dampf, wie in Fig. 1 gezeigt, so ist es weiterhin möglich, über die Leitung 8 einen Dampfstoß in die Aufschäumeinrichtung 4 zu geben, der das Restheißwasser aus der Leitung 5 ansaugt.

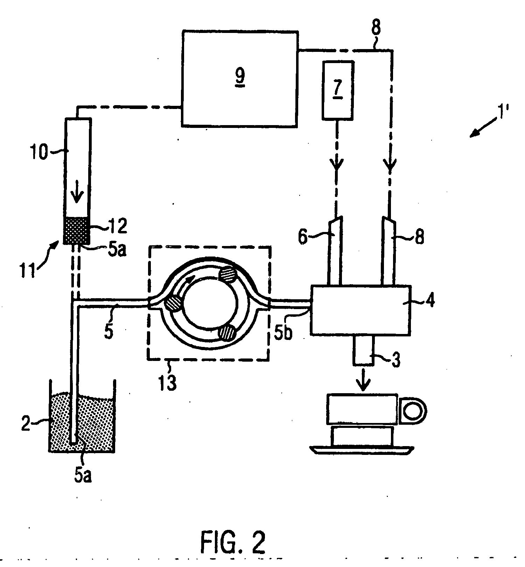

Fig. 2 zeigt eine erfindungsgemäße Vorrichtung 1', die sich von der Vorrichtung 1 gemäß Fig. 1 nur durch die nachfolgend beschriebenen Einzelheiten unterscheidet, wobei gleiche bzw. vergleichbare Bauteile mit den gleichen Bezugszeichen gekennzeichnet und nicht nochmals erläutert sind.

Die Vorrichtung 1' unterscheidet sich von der Vorrichtung 1 lediglich dadurch, dass das Einleiten der Milch aus dem Vorratsbehälter 2 in die Auslasseinrichtung 3 bzw. die Aufschäumeinrichtung 4 durch eine Pumpe 13 erfolgt bzw. unterstützt wird. Die Pumpe 13 ist in die Zufuhrleitung 5 zwischen dem Einlassende 5a im Vorratsbehälter 2 und dem Auslassende 5b an der Aufschäumeinrichtung 4 angeordnet. Der Betrieb der Vorrichtung 1' und der Reinigungsvorgang entspricht den Verfahren, wie sie bereits anhand Fig. 1 erläutert wurden. Lediglich das Austreiben von Restheißwasser kann hier auf einfache Weise durch Betätigen der Pumpe 13 erfolgen.

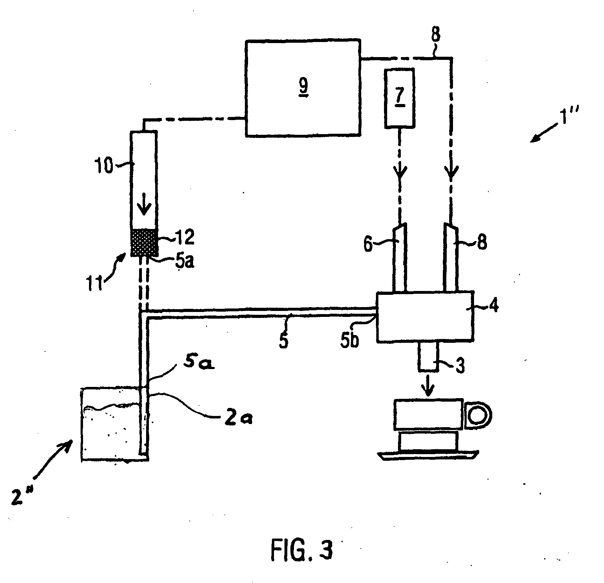

Fig. 3 zeigt ein weiteres Ausführungsbeispiel einer erfindungsgemäßen Vorrichtung 1", die sich von den Vorrichtungen 1 bzw. 1' gemäß den Fig. 1 und 2 nur durch die nachfolgend beschriebenen Einzelheiten unterscheidet, wobei gleiche bzw. vergleichbare Teile mit den gleichen Bezugszeichen gekennzeichnet und nicht nochmals erläutert sind.

Die Vorrichtung 1" unterscheidet sich lediglich durch einen abgewandelten Vorratsbehälter 2", der den Aufnahmeraum von Milch und einen am Vorratsbehälter befestigten Ansaugstutzen 2a aufweist. Im dargestellten Ausführungsbeispiel ist der Ansaugstutzen 2a so mit dem Vorratsbehälter 2" verbunden, dass beide problemlos zusammen in einer Geschirrspülmaschine gereinigt werden können. Der Ansaugstutzen 2a ist somit entweder permanent oder lösbar mit dem Vorratsbehälter 2" verbunden. Der Ansaugstutzen ist so bemessen und angeordnet, dass das Einlassende 5a der Zufuhrleitung 5 außerhalb des Milchspiegels im Vorratsbehälter 2" mit dem Ansaugstutzen 2a lösbar verbunden ist. Im dargestellten Ausführungsbeispiel ist der Ansaugstutzen ein senkrecht in den Vorratsbehälter 2" eintauchendes Röhrchen, das kurz oberhalb des Bodens des Vorratsbehälters 2" eine Ansaugöffnung aufweist und bis über den Milchspiegel im Vorratsbehälter 2" hinausreicht und dort mit dem Einlassende 5a der Zufuhrleitung 5 verbunden werden kann, wobei das Einlassende 5a bevorzugt auf den Ansaugstutzen 2a aufgesteckt wird. Zum Reinigen wird das Einlassende 5a vom Ansaugstutzen 2a entfernt und mit der Anschlusseinrichtung 11 verbunden.

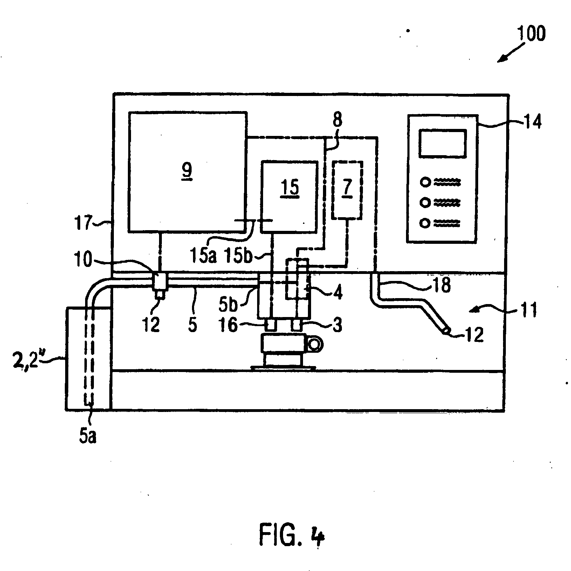

Die erfindungsgemäß ausgerüstete Kaffeemaschine gemäß Fig. 4 ist vom üblichen Typ, d.h. sie ist als Halb- bzw. Vollautomat ausgebildet und wird über eine nicht gezeichnete Steuereinheit gesteuert.

Die Kaffeemaschine 100 enthält ein Gehäuse 17, in und an dem die bei Kaffeemaschinen üblichen Elemente angeordnet sind. Über eine Bedieneinrichtung 14 kann der Benutzer verschiedene Getränke anfordern, die dann von der Kaffeemaschine selbsttätig zubereitet und ausgegeben werden.

Die Kaffeemaschine 100 enthält zu diesem Zweck beispielsweise eine übliche Brüheinheit 15, die über eine Leitung 15a mit Heißwasser aus dem Heißwasserbereiter 9 versorgt wird und über eine Leitung 15b mit einem Kaffeeauslass 16 verbunden ist. Die Kaffeemaschine 100 enthält weiterhin die bereits beschriebene Aufschäumeinrichtung 4 mit der Zufuhrleitung 5. Der Vorratsbehälter 2 für Milch ist im dargestellten Ausführungsbeispiel beispielsweise ein handelsüblicher Milchkarton, der in einer Halterung untergebracht ist. Der Vorratsbehälter 2 kann jedoch auch eine bevorzugt gekühlte Kammer im Inneren des Gehäuses 17 der Kaffeemaschine 100 sein.

Die Kaffeemaschine 100 ist mit einem der üblichen Heißwasserauslässe 10 versehen, wie sie an vielen Kaffeemaschinen vorgesehen sind, damit Tee zubereitet werden kann. Die Kaffeemaschine 100 enthält weiterhin einen gesonderten Dampfauslass 18, der als Schwenkhebel ausgebildet ist und beispielsweise zum Erwärmen von Getränken oder anderen Flüssigkeiten (Suppen) dient.

Der Heißwasserauslass 10 und/oder der Dampfauslass 18 sind mit der Anschlusseinrichtung 11 zum Anschließen des Einlassendes 5a der Zufuhrleitung 5 versehen; im dargestellten Ausführungsbeispiel sind an beiden Anschlüssen Kupplungsteile 12 vorgesehen.

Der Heißwasserauslass 10 ist im dargestellten Ausführungsbeispiel in der Nähe des Vorratsbehälters 2, 2" angeordnet, so dass dort die Zufuhrleitung 5 problemlos angeschlossen werden kann. Der Dampfauslass 18 befindet sich zwar an der dem Vorratsbehälter 2, 2" abgewandten Seite der Aufschäumeinrichtung 4, weist jedoch mit seinem Kupplungsstück 12 einen Abstand zur Aufschäumeinrichtung 4 auf, der kleiner ist als die Länge der Zufuhrleitung 5, so dass das Einlassende 5a auch am Dampfauslass 18 angeschlossen werden kann.

Der Reinigungsvorgang für die Zufuhrleitung 5 kann auch bei der Kaffeemaschine 100 in einer Weise durchgeführt werden, wie dies bereits anhand der Figuren 1 bis 3 beschrieben wurde, wobei die Zufuhrleitung 5 entweder mit Heißwasser oder mit Dampf gereinigt wird. Zu diesem Zweck muss der Benutzer nach dem Anschließen des Einlassendes 5a am Heißwasser- oder Dampfauslass 10, 18 über die Bedieneinrichtung 14 entweder die Ausgabe eines Heißwasserstoßes für eine Teebereitung oder die Ausgabe eines Dampfstoßes zum Erwärmen einleiten, je nachdem, wo die Zufuhrleitung 5 angeschlossen ist.

Auch das Austreiben von Restheißwasser kann in der bereits beschriebenen Art und Weise erfolgen.

Der erfindungsgemäße Reinigungsvorgang kann entweder im Rahmen einer Generalreinigung der Kaffeemaschine erfolgen, kann jedoch bevorzugt als Zwischenreinigungsschritt, gegebenenfalls nach jeder Milchausgabe, durchgeführt werden. Dadurch wird das Vermehren schädlicher Keime wirksam unterdrückt. Der Ansaugstutzen könnte auch in anderer Weise am Vorratsbehälter befestigt werden, beispielsweise könnte er die Wandung des Vorratsbehälters seitlich durchsetzen, oder aus dem Boden ausmünden. Der mit einem Ansaugstutzen versehene Vorratsbehälter erleichtert die Reinigung jedoch auch bei Kaffeemaschinen bzw. anderen Milchausgabegeräten, die keine Anschlusseinrichtung aufweisen, d. h. bei denen die Zufuhrleitung konventionell gereinigt werden muss.

## Patentansprüche

1. Kaffeemaschine, mit einem Heißwasser- und/oder Dampferzeuger (9), der mit einem Heißwasser- und/oder Dampfauslass (10,18) und mit einer Aufschäumeinrichtung (4) für Milch verbunden ist, die zwischen einer Ausgabeeinrichtung (3) und einem Milch-Vorratsbehälter (2, 2") angeordnet ist, wobei eine Zufuhrleitung (5) für Milch zur Aufschäumeinrichtung (4) vorgesehen ist, die mit ihrem Einlassende (5a) lösbar mit dem Vorratsbehälter (2, 2") verbunden ist, **dadurch gekennzeichnet, dass** eine Reinigungseinrichtung für die Zufuhrleitung (5) vorgesehen ist, die den Heißwasser- und/oder Dampfauslass (10,18) und eine Anschlusseinrichtung (11) zum lösbaren Anschließen des Einlassendes (5a) der Zufuhrleitung (5) am Heißwasser- und/oder Dampfauslass (10, 18) enthält.

2. Kaffeemaschine nach Anspruch 1, **dadurch gekennzeichnet, dass** die Anschlusseinrichtung (11) ein Kupplungsstück (12) enthält.

3. Kaffeemaschine nach Anspruch 1 oder 2, **dadurch gekennzeichnet, dass** der Heißwasser- und/oder Dampfauslass (10) im Bereich des Vorratsbehälters (2, 2") angeordnet ist.

4. Kaffeemaschine nach einem der Ansprüche 1 bis 3, **dadurch gekennzeichnet, dass** die Reinigungseinrichtung einen Heißwasserauslass (10) enthält und eine Einrichtung zum Entfernen von Restheißwasser aus der Zufuhrleitung (5) vorgesehen ist.

5. Kaffeemaschine nach Anspruch 3 oder 4, **dadurch gekennzeichnet, dass** die Anschlusseinrichtung (11) durch eine Steckverbindung mit einer Dimensionsanpassung zwischen dem Einlassende (5a) der Zufuhrleitung (5) und einem Auslassende des Heißwasser- und/oder Dampfauslasses (10) gebildet ist.

6. Kaffeemaschine nach einem der Ansprüche 1 bis 5, **dadurch gekennzeichnet, dass** das Einlassende (5a) der Zufuhrleitung (5) am Vorratsbehälter (2") befestigt ist.

7. Verfahren zum Betreiben der Kaffeemaschine nach einem der Ansprüche 1 bis 6, **dadurch gekennzeichnet, dass** das Einlassende (5a) der Zufuhrleitung (5) zum Reinigen vom Vorratsbehälter (2, 2") gelöst, mit einem Heißwasser- und/oder Dampfauslass (10) verbunden und anschließend eine Heißwasser- und/oder Dampfausgabe in die Zufuhrleitung (5) bewirkt wird.

8. Verfahren nach Anspruch 7, **dadurch gekennzeichnet, dass** nach dem Reinigen mit Heißwasser in der Zufuhrleitung (5) verbliebenes Restheißwasser entfernt wird.

9. Verfahren nach Anspruch 8, **dadurch gekennzeichnet, dass** das Restheißwasser ausgespült oder abgesaugt oder ausgetrieben wird.

## Claims

1. Coffee machine, comprising a hot water and/or steam generator (9), connected to a hot water and/or steam outlet (10, 18) and to a frothing device (4) for milk, which is arranged between a dispensing device (3) and a milk storage tank (2, 2"), wherein a supply line (5) for milk is provided to the frothing device (4), the supply line being detachably connected with its inlet end (5a) to the storage tank (2, 2") **characterized in that** a cleaning device for the supply line (5) is provided which comprises the hot water and/or steam outlet (10, 18) and a connecting device (11) for detachably connecting the inlet end (5a) of the supply line (5) to the hot water and/or steam outlet (10, 18).

2. Coffee machine according to claim 1, **characterized in that** the connecting device (11) comprises a coupling piece (12)

3. Coffee machine according to claim 1 or 2, **characterized in that** the hot water and/or steam outlet (10) is arranged in the region of the storage tank (2, 2").

4. Coffee machine according to one of the claims 1 to 3, **characterized in that** the cleaning device comprises a hot water outlet (10) and that a device for removing residual hot water from the supply line (5) is provided.

5. Coffee machine according to claim 3 or 4, **characterized in that** the connecting device (11) is formed by a plug-in connection with a dimensional adaptation between the inlet end (5a) of the supply line (5) and an outlet end of the hot water and/or steam outlet (10).

6. Coffee machine according to one of claims 1 to 5, **characterized in that** the inlet end (5a) of the supply line (5) is fixed to the storage tank (2").

7. Method for operating the coffee machine according to one of the claims 1 to 6 **characterized in that**, for cleaning purposes, the inlet end (5a) of the supply line (5) is disconnected from the storage tank (2, 2"), is connected to a hot water and/or steam outlet (10) and that subsequently a hot water and/or steam discharge into the supply line (5) is effected.

8. Method according to claim 7, **characterized in that** after the cleaning with hot water, residual hot water left in the supply line (5) is removed.

9. Method according to claim 8, **characterized in that** the residual hot water is rinsed out or sucked off or driven out.

## Revendications

1. Machine à café comprenant un générateur d'eau chaude et/ou de vapeur (9), qui est relié à une sortie d'eau chaude et/ou de vapeur (10, 18) et à un dispositif à faire mousser du lait (4) agencé entre un dispositif distributeur (3) et un réservoir de lait (2, 2"), une conduite d'alimentation (5) pour du lait étant prévue pour alimenter le dispositif à faire mousser le lait (4), et étant reliée de manière amovible, avec son extrémité d'entrée (5a), au réservoir (2, 2"),
**caractérisée en ce qu'**il est prévu un dispositif de nettoyage pour la conduite d'alimentation (5), qui comprend la sortie d'eau chaude et/ou de vapeur (10, 18) et un dispositif de raccordement (11) pour le raccordement amovible de l'extrémité d'entrée (5a) de la conduite d'alimentation (5) à la sortie d'eau chaude et/ou de vapeur (10, 18).

2. Machine à café selon la revendication 1, **caractérisée en ce que** le dispositif de raccordement (11) comprend une pièce d'accouplement (12).

3. Machine à café selon la revendication 1 ou la revendication 2, **caractérisée en ce que** la sortie d'eau chaude et/ou de vapeur (10) est agencée dans la zone du réservoir (2, 2").

4. Machine à café selon l'une des revendications 1 à 3, **caractérisée en ce que** le dispositif de nettoyage comprend une sortie d'eau chaude (10), et il est prévu un dispositif pour éliminer des résidus d'eau chaude de la conduite d'alimentation (5).

5. Machine à café selon la revendication 3 ou la revendication 4, **caractérisée en ce que** le dispositif de raccordement (11) est formé par une liaison à emmanchement, avec une adaptation dimensionnelle, entre l'extrémité d'entrée (5a) de la conduite d'alimentation (5) et une extrémité de sortie de la sortie d'eau chaude et/ou de vapeur (10).

6. Machine à café selon l'une des revendications 1 à 5, **caractérisée en ce que** l'extrémité d'entrée (5a) de la conduite d'alimentation (5) est fixée au réservoir (2").

7. Procédé pour faire fonctionner la machine à café selon l'une des revendications 1 à 6, **caractérisé en ce que** pour le nettoyage, on détache l'extrémité d'entrée (5a) de la conduite d'alimentation (5) du réservoir (2, 2"), et on la relie à une sortie d'eau chaude et/ou de vapeur (10), et l'on produit ensuite une distribution d'eau chaude et/ou de vapeur dans la conduite d'alimentation (5).

8. Procédé selon la revendication 7, **caractérisé en ce que** l'on élimine les résidus d'eau chaude restant dans la conduite d'alimentation (5) après le nettoyage à l'eau chaude.

9. Procédé selon la revendication 8, **caractérisé en ce que** les résidus d'eau chaude sont éliminés par rinçage ou sont aspirés ou expulsés.
